# EUROPEAN PATENT APPLICATION

(11) **EP 3 217 209 A1**
(43) Date of publication of application: **13.09.2017**
(21) Application number: 15857467.3
(22) Date of filing: 02.11.2015
(51) Int. Cl.: G02B 27/01, B60K 35/00, G02B 26/10

(54) **HEAD-UP DISPLAY DEVICE**

(30) Priority: 04.11.2014 JP 2014224091
(71) Applicant: Nippon Seiki Co., Ltd., Nagaoka-shi, Niigata 940-8580 (JP)
(72) Inventor: SEKIYA,Shun, Nagaoka, Niigata (JP); TAKAHASHI,Yuichi, Nagaoka, Niigata (JP)
(74) Representative: Carpmaels & Ransford LLP
(86) International application number: PCT/JP2015/080878
(87) International publication number: WO 2016/072372

(57) **Abstract**

The present invention relates to a head-up display device that allows a viewer to view an actual scene overlapped with a virtual image, and that is capable of creating a display image with suppressed luminance variation. A MEMS scanner 20 scans synthesized laser light 500 two-dimensionally in the main scanning direction H and the sub-scanning direction V substantially orthogonal to the main scanning direction H. A controller unit 300 causes a first scan for generating a display image M on a transmissive screen 40 by scanning in the main scanning direction H at high speed while scanning in the sub-scanning direction V, and a second scan for scanning a position displaced more toward the sub-scanning direction V than the first scan on the transmissive screen 40.

## Description

### Technical Field

The present invention relates to a head-up display device that causes a viewer to visually recognize a virtual image with scenery.

### Background Art

A head-up display device (hereinafter, HUD device) in which a semiconductor laser is provided as a light source is disclosed in, for example, PTL 1. This HUD device includes a semiconductor laser for outputting laser light, a scanning unit for two-dimensionally deflecting the laser light emitted from this semiconductor laser to thereby generate an image, a screen for emitting the laser light scanned by the scanning unit as diffused image light, and a relay optical system for directing the image light emitted from the screen to a transmissive reflective surface.

Generally, a spot pattern referred to as "speckles" is generated in an image generated by a HUD device using laser light. The speckles are caused by high coherence of laser light and is generated when laser beams diffused on a screen interfere with each other and strength and weakness of the beams occur. For example, speckles are remarkably generated in a diffusion plate having a diffusion material on the inside thereof and a frosted diffusion plate for diffusing light by using unevenness of a surface thereof. When speckles are generated, resolution of an image is reduced due to a spot pattern, thereby reducing visibility.

As a technique for solving such a problem, PTL 2 discloses a technique in which a double micro lens array (DMLA) formed by doubly arranging micro lens arrays (MLAs) is used for a screen of a HUD device. When the DMLA is used as described above, laser light is diffused by a refraction effect of a micro lens group, and therefore it is possible to reduce generation of speckles.

However, in order to reduce speckles by using MLAs with a screen, it is also necessary to devise laser light. Laser light emitted from a semiconductor laser normally has an oval shape, and an intensity distribution thereof is substantially Gaussian. Therefore, in the HUD device disclosed in PTL 2, laser light is shaped to have the same shape as a single lens of an MLA and, in addition, an intensity distribution of the laser light is converted into a top-hat intensity distribution by using a lens or the like.

With this combination of shaping of laser light, conversion of an intensity distribution, and MLAs, interference patterns of the top hat are arranged in the whole eye box with no gap, and a light distribution having no difference in light intensity between interference patterns is achieved. Thus, in a case where pupils of a viewer are in the eye box, an amount of light incident on the inside of the pupils is not changed even when positions of the pupils are moved, and therefore it is possible to cause a viewer to visually recognize a display image with a satisfactory quality.

### Citation List

### Patent Literature(s)

PTL 1: JP-A-7-270711
PTL 2: JP-T-2007-523369 (The term "JP-T" as used herein means a published Japanese translation of a PCT patent application.)

### Summary of Invention

### Technical Problem(s)

However, in a case where shaping of beams and conversion of an intensity distribution described above are not appropriately performed, interference patterns caused by the MLAs and laser light are not arranged at a high density on the eye box, and therefore unevenness of luminance and unevenness of color occur in a display image. Further, in fact, even in a case where shaping of beams and conversion of an intensity distribution described above are appropriately performed, it is difficult to completely eliminate gaps between interference patterns in the whole eye box, and, when positions of pupils are moved, an amount of light incident on the pupils is changed, and therefore unevenness of luminance and unevenness of color occur in a display image.

In view of this, the invention has been made in view of the above problems, and an object thereof is to provide a head-up display device capable of generating a display image in which unevenness of luminance is reduced.

### Solution to Problem(s)

The invention employs the following means in order to solve the above problems.

That is, a head-up display device in the first invention includes: a light source configured to emit laser light; a scanning unit configured to two-dimensionally scan the laser light in a main scanning direction and a sub-scanning direction different from the main scanning direction; a lens array screen having a plurality of micro lenses that are periodically arranged, the lens array screen being configured to diffuse the laser light scanned by the scanning unit and direct the laser light to a visual recognition region; and a control unit configured to control the light source and the scanning unit to generate a display image on the lens array screen, wherein the control unit causes first scanning to be performed and causes second scanning to be performed, the first scanning being scanning in which scanning is performed in the sub-scanning direction while scanning is being performed in the main scanning direction at a high speed, the second scanning being scanning in which a position shifted in the sub-scanning direction from the first scanning on the lens array screen is scanned.

### Advantageous Effects of Invention

The invention can generate a display image in which unevenness of luminance is reduced.

### Description of Embodiments

Hereinafter, a first embodiment of a head-up display device (hereinafter, referred to as "HUD device") of the invention will be described with reference to the attached drawings.

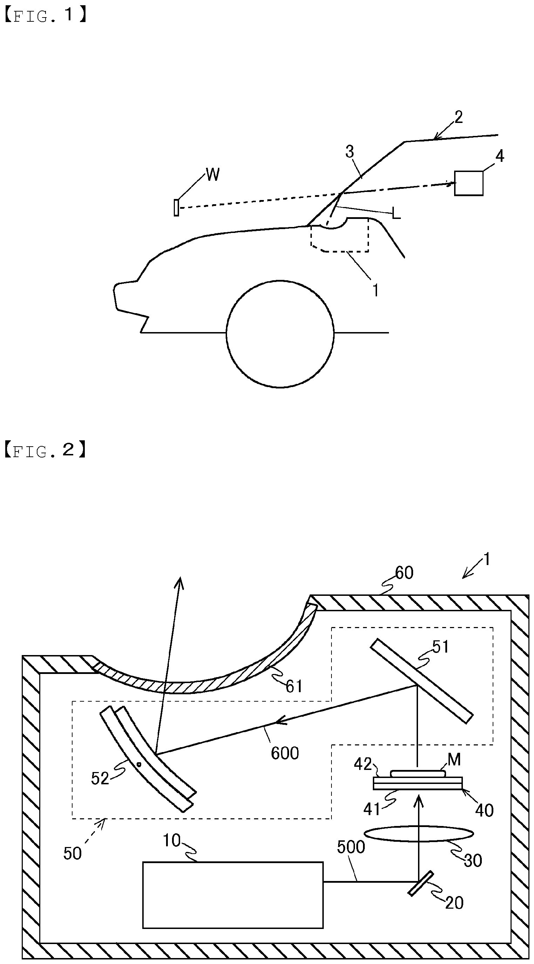

As shown in Fig. 1, a HUD device 1 according to this embodiment is a device that is provided in a dashboard of a vehicle 2 and causes a windshield 3 to reflect image light 600 showing a display image M (see Fig. 2) generated on a transmissive screen 40 described below so that a driver visually recognizes a virtual image W (display image) of the display image M indicating vehicle information. The driver visually recognizes the display image M as the virtual image W in an eye box 4 serving as a visual field. Note that the virtual image W in Fig. 1 is schematically shown in order to facilitate sensuous understanding. The same applies to the display image M in Fig. 2.

As shown in Fig. 2, the HUD device 1 shown in Fig. 1 includes a synthesized laser light generation device 10, a MEMS (Micro Electro Mechanical System) scanner 20, a field lens 30, the transmissive screen 40, a relay optical unit 50, and a housing 60.

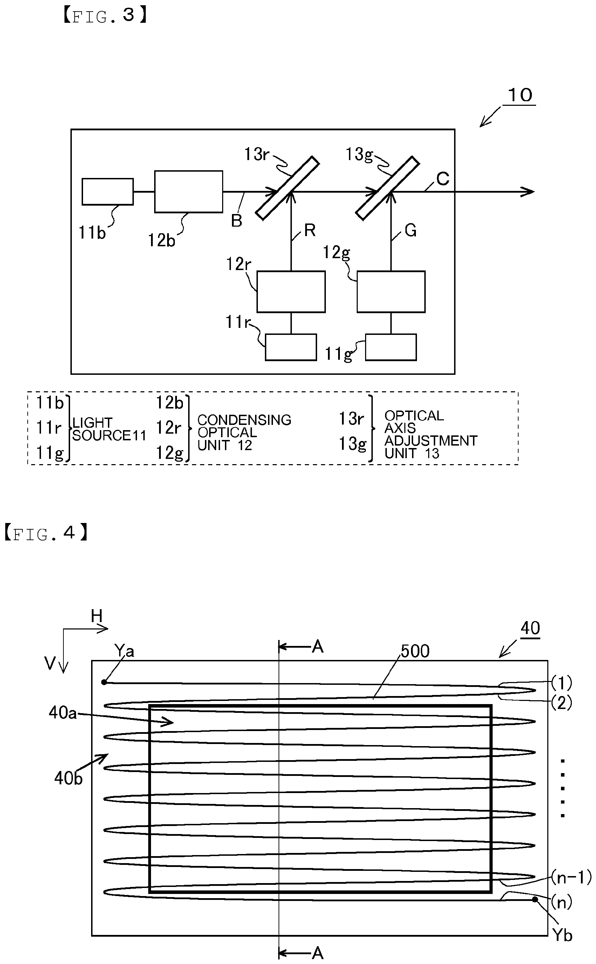

The synthesized laser light generation device 10 is a device for adjusting optical axes of laser beams B, R, and G emitted by respective light sources 11b, 11r, and 11g described below and emitting a single beam of synthesized laser light 500, and includes a light source 11, a condensing optical unit 12, and an optical axis adjustment unit 13 as shown in Fig. 3.

As shown in Fig. 3, the light source 11 is made up of the blue light source 11b for emitting blue laser light B, the red light source 11r for emitting red laser light R, and the green light source 11g for emitting green laser light G. The light sources 11b, 11r, and 11g are arranged so that polarization directions (electric field oscillation directions) of the respective laser beams B, R, and G are matched when the laser beams B, R, and G are emitted as the synthesized laser light 500.

The condensing optical unit 12 is a lens whose aberration is corrected so that the laser beams B, R, and G serving as divergent light emitted from the light source 11 are converted into convergent light and are condensed into a lower surface of the transmissive screen 40 described below and is made up of a blue condenser lens 12b, a red condenser lens 12R, and a green condenser lens 12G arranged on optical paths of the laser beams B, R, and G emitted from the respective light sources 11b, 11r, and 11g. Each of the laser beams B, R, and G emitted from the light source 11 has a substantially Gaussian light intensity distribution (not shown), and therefore the synthesized laser light 500 (laser beams B, R, and G), which is condensed by the condensing optical unit 12 and reaches the transmissive screen 40, can be similarly considered to have a substantially Gaussian light intensity distribution 710.

The optical axis adjustment unit 13 roughly aligns the optical axes of the laser beams B, R, and G and directs the laser beams as the synthesized laser light 500 toward the MEMS scanner 20 and is made up of a first dichroic mirror 13R for reflecting only a wavelength range of red laser light R and a second dichroic mirror 13G for reflecting only a wavelength range of green laser light G.

Referring back to Fig. 2, the MEMS scanner 20 scans the synthesized laser light 500 emitted by the synthesized laser light generation device 10 and generates the display image M on a surface side of the transmissive screen 40. As shown in Fig. 4, the MEMS scanner 20 performs main scanning in a main scanning direction H a plurality of times while performing sub-scanning in a sub-scanning direction V substantially orthogonal to the main scanning direction H, thereby generating the display image M on the transmissive screen 40 described below.

The field lens 30 causes the synthesized laser light 500 scanned by the MEMS scanner 20 to be incident on the transmissive screen 40 at an angle of incidence based on a scanning position. The field lens 30 is formed and arranged to optimize the angle of incidence of the synthesized laser light 500 on the transmissive screen 40 in accordance with characteristics of optical systems (relay optical unit 50, windshield 3) subsequent to the transmissive screen 40.

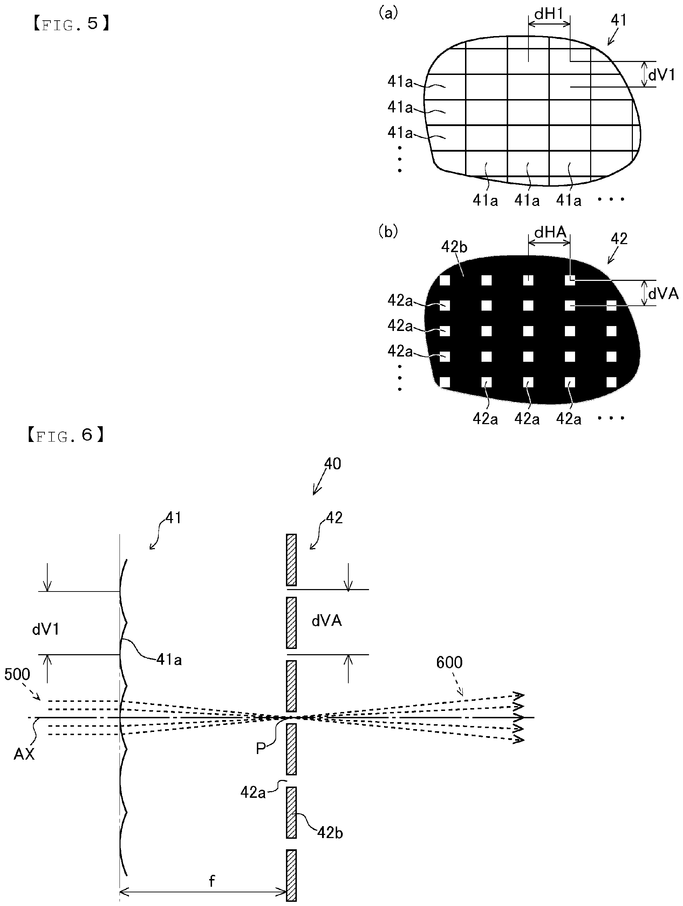

As shown in Fig. 6, the transmissive screen 40 is made up of a micro lens array (hereinafter, MLA) 41 and an aperture array 42 arranged on a front surface side of the MLA 41 and displays the display image M on the surface side. The transmissive screen 40 enlarges an exit pupil of the synthesized laser light 500 entering from the MEMS scanner 20 and emits the synthesized laser light 500 as the image light 600 toward the relay optical unit 50.

Herein, the transmissive screen 40 will be described with reference to Figs. 5 and 6.

Fig. 5(a) is a plan view of the MLA 41, and Fig. 5(b) is a plan view of the aperture array 42. Further, Fig. 6 is a cross-sectional view of the transmissive screen 40 and is a cross-sectional view taken along A-A in Fig. 4.

As shown in Fig. 5(a), the MLA 41 includes a plurality of micro lenses (hereinafter, referred to as "MLs") 41a on a surface thereof and is formed so that the MLs 41a are periodically arrayed with a pitch of dH1 in the main scanning direction H and with a pitch of dV1 in the sub-scanning direction V. In this embodiment, dH1 > dV1 is satisfied, and the MLs 41a are periodically arrayed in a rectangular grid pattern and are formed so that a gap and a level difference generated in adjacent MLs 41a are minimized. The pitch herein means a distance between centers of lenses of the MLs 41a adjacent to each other. With this rectangular lens array, it is possible to efficiently illuminate the eye box 4 with laser light emitted through the transmissive screen 40 with a rectangular shape. In this embodiment, the pitch dV1 in the sub-scanning direction V is set to a size corresponding to substantially one pixel.

Although rectangular micro lenses are arrayed in a grid pattern in this embodiment, the lenses may have a square shape. Further, hexagonal micro lenses may be arrayed in a honeycomb pattern.

As shown in Fig. 5(b), the aperture array 42 includes in a surface thereof, a plurality of opening portions 42a that are periodically arrayed with a pitch of dHA in the main scanning direction H and with a pitch of dVA in the sub-scanning direction V. The pitch herein means a distance between centers of the opening portions 42a adjacent to each other.

In this embodiment, dHA > dVA is satisfied in the same way as the MLA 41. Further, the pitch in the aperture array 42 is slightly larger than the pitch in the MLA 41, i.e., dHA > dH1 is satisfied.

The opening portion 42a of the aperture array 42 is formed so that the size thereof is adjusted to be about 1/5 to 1/10 the size of the lens of the ML 41a. A region other than the opening portions 42a in the aperture array 42 is a light shielding portion 42b as shown in Fig. 5(b). The light shielding portion 42b is made of, for example, a material that absorbs visible light such as black resist for use in a liquid crystal panel. In other words, regions other than the opening portions 42a on both surfaces of the aperture array 42 are surfaces of the light shielding portion 42b. Therefore, among beams of laser light reaching the aperture array 42, beams other than beams passing through the opening portions 42a are mostly absorbed into the light shielding portion 42b.

As shown in Fig. 6, the MLA 41 and the aperture array 42 are arranged so that surfaces of the MLA 41 and the aperture array 42 are parallel to each other and the center of the opening portion 42a positioned at the center of the aperture array 42 is positioned on an optical axis AX of the ML 41a positioned at the center of the MLA 41. Further, both the MLA and the aperture array are arranged at an interval of a focal length f of the ML 41a. Note that the ML 41a positioned at the center of the MLA 41 means an ML 41a provided at a position irradiated with light existing at the center of laser light scanned by the MEMS scanner 20. Further, the MLA 41 and the aperture array 42 are formed and arranged so that each of the plurality of opening portions 42a of the aperture array 42 and each of the plurality of micro lenses 41a of the MLA 41 are paired and the center of the opening portion 42a is positioned at a condensing point P of laser beams R, G, and B by using the MLA 41.

The transmissive screen 40 is configured as described above, and therefore laser light condensed by the MLA 41 exactly passes through the opening portion 42a of the aperture array 42. Thus, it is possible to efficiently use laser light emitted by the light source 11 as light showing the display image M. Meanwhile, external light that is inversely transmitted through the optical path of the laser light in the HUD device 1 shown in Fig. 2 and reaches the transmissive screen 40 is mostly absorbed into the light shielding portion 42b of the aperture array 42. Therefore, reflection of external light is remarkably reduced. In a case where the light shielding portion 42b is not provided, external light diffused and reflected by the transmissive screen 40 reaches eyes of a viewer through the optical path of the HUD device 1. In this case, the transmissive screen 40 is superimposed on a display image and appears as a white frame, and therefore visibility is deteriorated.

Further, among beams of laser light reaching the transmissive screen 40, beams other than the image light 600 (i.e., beams showing display image M) passing through the opening portions 42a of the aperture array 42 are mostly absorbed into the light shielding portion 42b of the aperture array 42. Therefore, it is also possible to reduce internal reflection of laser light in the transmissive screen 40.

Although the aperture array 42 is formed on the transmissive screen 40 in this embodiment, the MLA 41 may be provided alone.

The relay optical unit 50 is provided in an optical path between the transmissive screen 40 and the windshield 3 and is an optical system for correcting light so that the display image M displayed on a front surface of the transmissive screen 40 is formed as the virtual image W having a desired size at a desired position. The relay optical unit 50 is made up of two mirrors, i.e., a plane mirror 51 and a concave mirror 52.

The plane mirror 51 is a planar total reflection mirror or the like and reflects the image light 600 showing the display image M displayed on the transmissive screen 40 toward the concave mirror 52.

The concave mirror 52 is a concave mirror or the like and causes a concave surface to reflect the image light 600 reflected by the plane mirror 51, thereby emitting the reflected light toward the windshield 3. With this, the size of the virtual image W to be formed is a size obtained by enlarging the display image M.

The housing 60 has an opening portion having a predetermined size in an upper portion thereof and is made of hard resin or the like to have a box shape. The housing 60 houses the synthesized laser light generation device 10, the MEMS scanner 20, the field lens 30, the transmissive screen 40, the relay optical unit 50, and the like at predetermined positions thereinside. Further, a window portion 61 is attached to the opening portion of the housing 60.

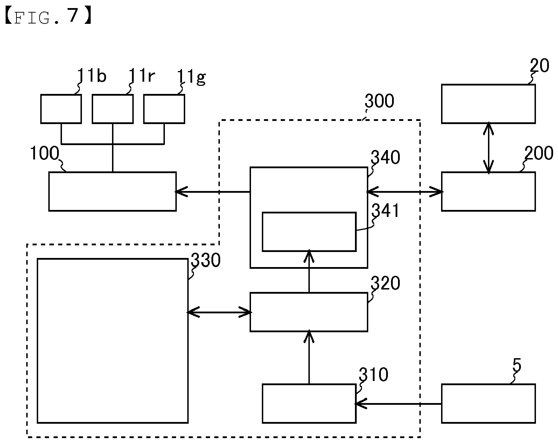

A control system of the HUD device 1 will be described with reference to Fig. 7.

As shown in Fig. 7, the HUD device 1 includes, in addition to the members described above, an LD control unit 100, a MEMS control unit 200, and a controller unit 300 for controlling the LD control unit 100 and the MEMS control unit 200. Those control units are mounted on, for example, a printed circuit board (not shown) provided in the housing 60. Further, those control units may be provided outside the HUD device 1 and be electrically connected to the HUD device 1 (light sources 11r, 11g, and 11b, MEMS scanner 20, and the like) via wiring.

The LD control unit 100 is made up of, for example, a driver IC for driving the light sources 11b, 11r, and 11g and drives the light sources 11b, 11r, and 11g with a PWM method or a pulse amplitude modulation (PAM) method under the control of the controller unit 300 (on the basis of an LD drive signal from a display control unit 340).

The MEMS control unit 200 is made up of, for example, a driver IC for driving the MEMS scanner 20 and drives the MEMS scanner 20 under the control of the controller unit 300 (on the basis of a scanning control signal from the display control unit 340). The MEMS control unit 200 causes the MEMS scanner 20 to resonate in the main scanning direction H by using a sinusoidal main scanning drive signal (main scanning driving voltage). Further, the MEMS control unit 200 vibrates the MEMS scanner 20 in the sub-scanning direction V by using a sub-scanning drive signal (sub-scanning driving voltage).

The MEMS control unit 200 acquires an oscillation position of a piezoelectric element that moves a mirror of the MEMS scanner 20 at each time point, calculates feedback data on the basis of this oscillation position, and outputs this feedback data to the display control unit 340 described below.

The feedback data output from the MEMS control unit 200 is data containing scanning position detection data related to scanning positions by the MEMS scanner 20, such as the number of main scanning lines n, a scanning start position Ya, a display start position (not shown), a display end position (not shown), and a scanning end position Yb shown in Fig. 4, actually measured main resonance frequency data showing a resonance frequency obtained when the MEMS scanner 20 actually resonates in the main scanning direction H, and actually measured sub-resonance frequency data showing a resonance frequency obtained when the MEMS scanner 20 actually resonates in the sub-scanning direction V.

The controller unit 300 is made up of a microcontroller, an FPGA (Field Programmable Gate Array), an ASIC (Application Specific Integrated Circuit), and the like and includes an input processing unit 310, a memory control unit 320, a frame buffer 330, and the display control unit 340. The controller unit 300 controls LDs (light source 11r, light source 11g, light source 11b) and the MEMS scanner 20 via the LD control unit 100 and the MEMS control unit 200 on the basis of an image signal input from a vehicle ECU5, thereby generating an image M based on the image signal on the transmissive screen 40. Note that the control unit of the invention is made up of the LD control unit 100, the MEMS control unit 200, and the controller unit 300.

The input processing unit 310 inputs an image signal from the vehicle ECU5 and processes data thereof to provide a format suitable for processing in the controller unit 300.

The memory control unit 320 stores frame data converted in the input processing unit 310 on the frame buffer 330. The frame buffer 330 is made up of, for example, a volatile memory such as a DRAM and an SRAM or a rewritable nonvolatile memory such as a flash memory.

Upon receipt of a command from the display control unit 340, the memory control unit 320 further extracts the frame data from the frame buffer 330 and outputs the frame data to the display control unit 340, and the display control unit 340 stores the frame data on a buffer memory 341 in the display control unit 340.

The display control unit 340 executes program data stored in advance and therefore outputs an LD drive signal to the LD control unit 100 and further outputs a scanning control signal to the MEMS control unit 200 to control the light sources 11r, 11g, and 11b and the MEMS scanner 20, thereby generating the display image M on the transmissive screen 40.

The configuration of the HUD device 1 according to this embodiment has been described above.

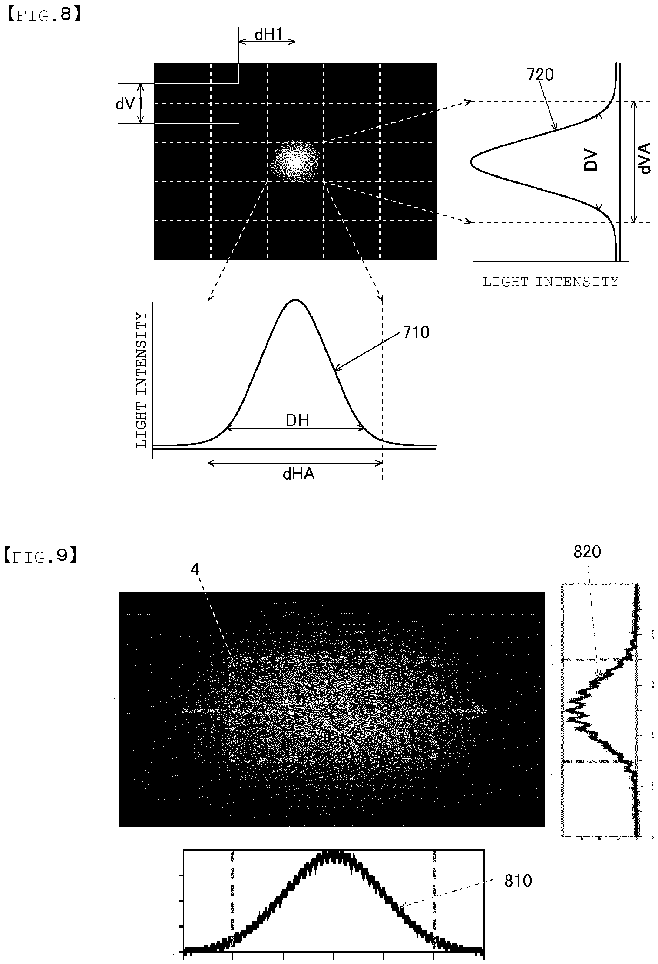

A shape and the light intensity distribution 710 (720) of the synthesized laser light 500 reaching the transmissive screen 40 in this embodiment and a distributed light intensity distribution 810 (820) of the image light 600 obtained by causing the synthesized laser light 500 to pass through the transmissive screen 40 will be described with reference to Fig. 8 and Fig. 9. Fig. 8 is a diagram for explaining a relationship between the transmissive screen 40 and the synthesized laser light 500 and the light intensity distribution 710 (720) of the synthesized laser light 500, and Fig. 9 is a diagram for explaining the distributed light intensity distribution 810 (820) of the image light 600 emitted from the transmissive screen 40.

The synthesized laser light 500 converted into convergent light by the condensing optical unit 12 is condensed to have a substantially minimum beam diameter at a position at which the synthesized laser light is incident on the MLA 41. This beam diameter is a diffraction limit determined on the basis of a beam diameter in the condensing optical unit 12 and a distance between the condensing optical unit 12 and the MLA 41. Note that the following description will be made on the premise that the beam diameter of the synthesized laser light 500 incident on the transmissive screen 40 in the main scanning direction H is referred to as "DH" and the beam diameter thereof in the sub-scanning direction V is referred to as "DV". The beam diameter DH(DV) in the description of this embodiment is prescribed as a diameter from a peak intensity of the synthesized laser light 500 in the main scanning direction H (sub-scanning direction V) to positions at which the intensity is 1/e² (13.5%) of the peak intensity.

### (Main scanning)

As shown in Fig. 8, the beam diameter DH in the main scanning direction H is smaller than the pitch dH1 of the MLA 41 in the main scanning direction H, and the light intensity distribution 710 in the main scanning direction H can be considered to be substantially Gaussian. The image light 600 refracted by the ML 41a of the MLA 41 passes through the opening portion 42a of the aperture array 42 and is diverged and is then directed to the eye box 4. As shown in Fig. 9, the distributed light intensity distribution 810 of the image light 600 in the main scanning direction H, the image light 600 being image light with which the eye box 4 is irradiated, behaves like a substantially Gaussian distribution. When the beam diameter DH in the main scanning direction H is set to be smaller than the pitch dH1 of the MLA 41, the synthesized laser light 500 is hardly incident on the plurality of MLs 41a, and therefore the image light 600 emitted from the MLA 41 hardly generates an interference fringe in the eye box 4.

In main scanning of this embodiment, the light source 11 is driven for about 10 nsec in order to form a single pixel of the display image M (scan a single ML 41a). During that time, the MEMS scanner 20 continuously performs scanning in the main scanning direction H, and therefore the synthesized laser light 500 is moved in the main scanning direction H by an amount of a substantially single ML 41a within a driving period of the light source 11. Then, a peak of the distributed light intensity distribution 810 of the image light 600 emitted from the transmissive screen 40 in the main scanning direction H is shifted in the eye box 4.

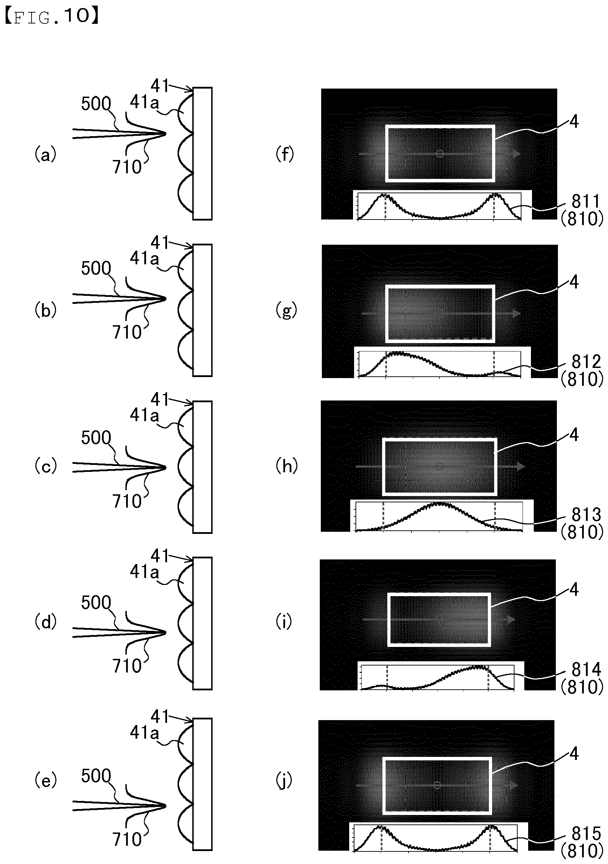

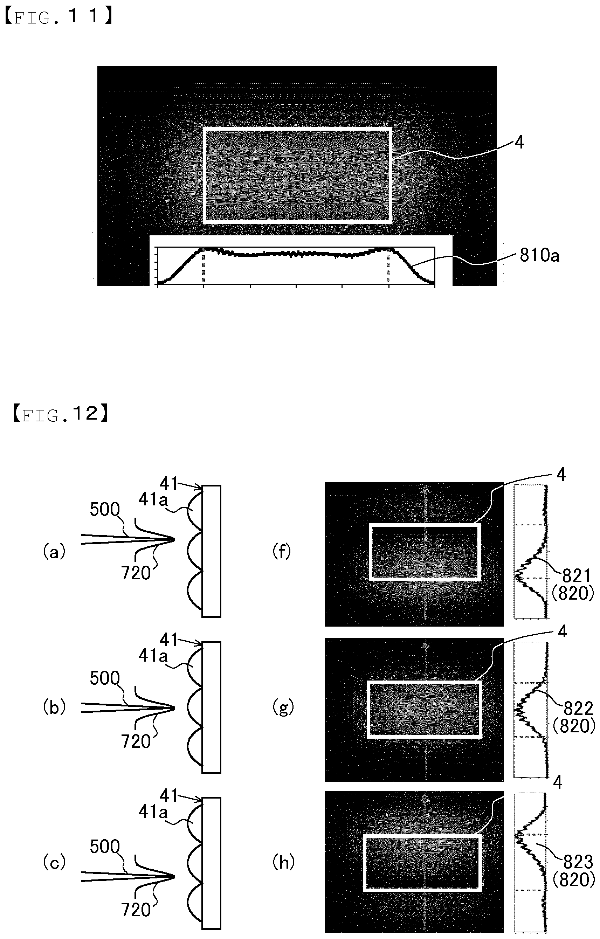

Fig. 10 shows a relationship between a position of the synthesized laser light 500 incident on the ML 41a in the main scanning direction H and the distributed light intensity distribution 810 in the main scanning direction H in the eye box 4, and (a) and (f), (b) and (g), (c) and (h), (d) and (i), and (e) and (j) correspond to each other. When a single MLA 41 is scanned by the synthesized laser light 500 in the main scanning direction H as shown in Figs. 10 (a) to (e), different distributed light intensity distributions 810 (811, 812, 813, 814, 815) shown in Figs. 10 (f) to (j) are obtained. When those different distributed light intensity distributions 810 are integrated by a time taken to scan a single ML 41a, as shown in Fig. 11, it is possible to form a substantially uniform distributed light intensity distribution 810 that can be considered to be substantially top-hat in the main scanning direction H in the whole eye box 4.

### (Sub-scanning)

As shown in Fig. 8, the beam diameter DV in the sub-scanning direction V is smaller than the pitch dV1 of the MLA 41 in the sub-scanning direction V, and the light intensity distribution 720 in the sub-scanning direction V can be considered to be substantially Gaussian. The image light 600 refracted by the ML 41a of the MLA 41 passes through the opening portion 42a of the aperture array 42 and is diverged and is then directed to the eye box 4. As shown in Fig. 9, the distributed light intensity distribution 820 of the image light 600 in the sub-scanning direction V, the image light 600 being image light with which the eye box 4 is irradiated, behaves like a substantially Gaussian distribution. When the beam diameter DV in the sub-scanning direction V is set to be smaller than the pitch dV1 of the MLA 41, the synthesized laser light 500 is hardly incident on the plurality of MLs 41a, and therefore the image light 600 emitted from the MLA 41 hardly generates an interference fringe in the eye box 4.

The MEMS scanner 20 performs main scanning while performing sub-scanning, and therefore a scanning line on the transmissive screen 40 is not parallel to the main scanning direction H and is formed on the transmissive screen 40 as an oblique scanning line (see Fig. 4). Specifically, the scanning line is moved in the sub-scanning direction V by an amount of a substantially single ML 41a while a single line is being scanned in the main scanning direction H. Therefore, a position of the synthesized laser light 500 scanned in the ML 41a in the sub-scanning direction V is changed as shown in Figs. 12 (a), (b), and (c) while a single line is being scanned in the main scanning direction H, and a peak position of the distributed light intensity distribution 820 in the sub-scanning direction V is shifted as shown in Figs. 12 (f), (g), and (h). Then, when the virtual image W is visually recognized from a predetermined position in the eye box 4, a pixel that can be visually recognized clearly and a pixel that cannot be visually recognized are mixed among pixels arranged in the main scanning direction H. This reduces visibility of the virtual image W. According to the HUD device 1 of the invention, variation of the distributed light intensity distribution 820 in the sub-scanning direction V in the eye box 4, the variation occurring due to sub-scanning, can be reduced by using a scanning method described below.

With this, a scanning method using the MEMS scanner 20 of the invention will be described with reference to Fig. 13 to Fig. 15. Fig. 13 shows time transition of the sub-scanning position Y. Fig. 14 is a plan view of the transmissive screen 40, which shows a state in which the synthesized laser light 500 is scanned on the transmissive screen 40. Fig. 15 shows the distributed light intensity distribution 820 in the sub-scanning direction V in the eye box 4 by applying the invention.

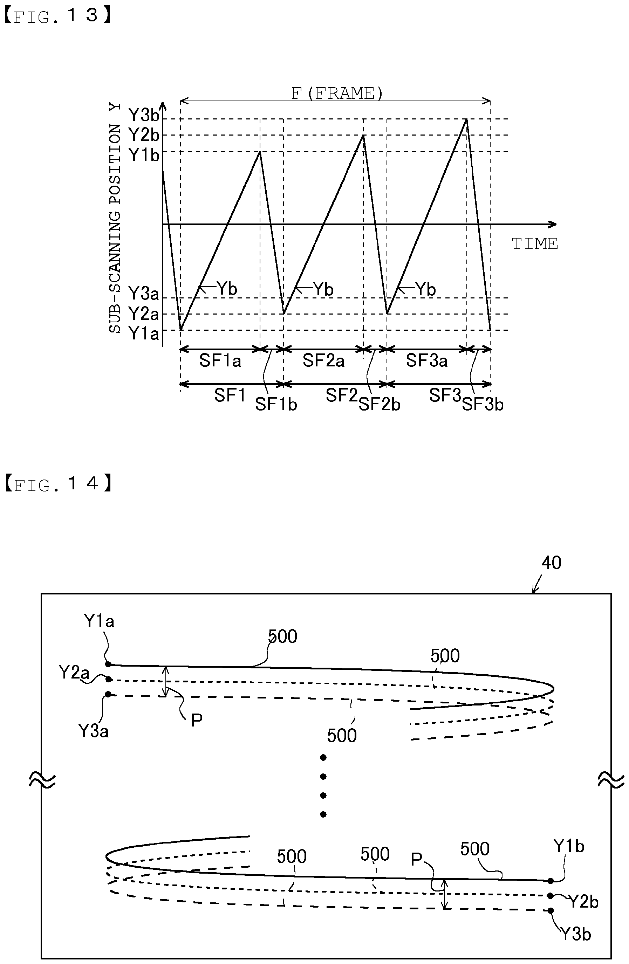

In this embodiment, as shown in Fig. 13, a frame F for drawing the display image M includes three sub-frames SF, i.e., a first sub-frame SF1, a second sub-frame SF2, and a third sub-frame SF3. Further, each sub-frame SF includes an actual scanning period (first actual scanning period SF1a, first actual scanning period SF2a, or third actual scanning period SF3a) in which a display area 40a is scanned to generate the display image M and a blanking period (first blanking scanning period SF1b, second blanking scanning period SF2b, or third blanking scanning period SF3b) in which the display image M is not generated.

Note that the frame F is set to be smaller than 1/60 second (temporal resolution of human eye) of a critical fusion frequency (60 Hz) or more with which a human can visually recognize flickering. That is, the first sub-frame SF1, the second sub-frame SF2, and the third sub-frame SF3 forming the frame F is set to be smaller than 1/180 second (180 Hz or more).

First, in the first sub-frame SF1, the display control unit 340 starts main scanning and sub-scanning of the MEMS scanner 20 from a first scanning start position Y1a and controls lighting of the light sources 11r, 11g, and 11b on the basis of drawing data of the first sub-frame SF1 stored on the buffer memory 341 at a timing at which a scanning position approaches the display area 40a, thereby drawing the display image M. Then, in a case where the scanning position of the MEMS scanner 20 is moved to a non-display area 40b, the display control unit 340 moves the scanning position of the MEMS scanner 20 from a first scanning end position Y1b to a second scanning start position Y2a in the first blanking scanning period SF1b (example of first scanning).

Then, in the second sub-frame SF2, the display control unit 340 starts main scanning and sub-scanning of the MEMS scanner 20 from the second scanning start position Y2a and controls lighting of the light sources 11r, 11g, and 11b on the basis of drawing data of the second sub-frame SF2 stored on the buffer memory 341 at a timing at which the scanning position approaches the display area 40a, thereby drawing the display image M. Then, in a case where the scanning position of the MEMS scanner 20 is moved to the non-display area 40b, the display control unit 340 moves the scanning position of the MEMS scanner 20 from a second scanning end position Y2b to a third scanning start position Y3a in the second blanking scanning period SF2b (example of second scanning).

Then, in the third sub-frame SF3, the display control unit 340 starts main scanning and sub-scanning of the MEMS scanner 20 from the third scanning start position Y3a and controls lighting of the light sources 11r, 11g, and 11b on the basis of drawing data of the third sub-frame SF3 stored on the buffer memory 341 at a timing at which the scanning position approaches the display area 40a, thereby drawing the display image M. Then, in a case where the scanning position of the MEMS scanner 20 is moved to the non-display area 40b, the display control unit 340 moves the scanning position of the MEMS scanner 20 from a third scanning end position Y3b to the first scanning start position Y1a in the third blanking scanning period SF3b (example of third scanning).

Note that the second scanning start position Y2a is a position shifted from the first scanning start position Y1a in the sub-scanning direction V direction by a predetermined value, and the third scanning start position Y3a is a position shifted from the second scanning start position Y2a in the sub-scanning direction V direction by a predetermined value. A shift width P from the first scanning start position Y1a to the third scanning start position Y3a in the sub-scanning direction V direction is desirably set to be smaller than the pitch dVA of the MLA 41 in the sub-scanning direction V.

Further, the drawing data of the first sub-frame SF1, the drawing data of the second sub-frame SF2, and the drawing data of the third sub-frame SF3 are the same drawing data, and the same display image M is generated on the transmissive screen 40 in the first sub-frame SF1, the second sub-frame SF2, and the third sub-frame SF3.

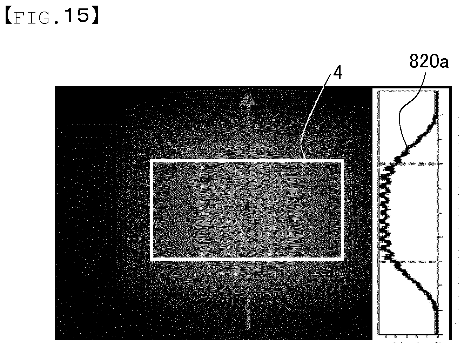

With this scanning method, beams of the synthesized laser light 500 whose positions are different in the sub-scanning direction V because of the plurality of sub-frames (first sub-frame SF1, second sub-frame SF2, and third sub-frame SF3) can be incident on the ML 41a in a single frame. Therefore, the distributed light intensity distribution 820 in the sub-scanning direction V in the eye box 4 can be a distributed light intensity distribution 820a that is substantially uniform in the sub-scanning direction V direction as shown in Fig. 15, the distributed light intensity distribution 820a being obtained by hourly averaging the distributed light intensity distribution 820 having peaks at different positions as shown in Figs. 12 (a), (b), and (c). In this scanning method, when the beam diameter DH in the main scanning direction H is set to be smaller than the pitch dH1 of the MLA 41, the synthesized laser light 500 is hardly incident on the plurality of MLs 41a. This makes it possible to reduce speckles and interference fringes and reduce unevenness of luminance in each pixel of the virtual image W visually recognized by a viewer.

Note that the invention is not limited to the above embodiment and drawings. It is possible to make modification (including deletion of constituent elements) as appropriate within the scope of the invention.

In the above embodiment, the distributed light intensity distribution 820 in the sub-scanning direction V in the eye box 4 is made substantially uniform by using three sub-frames SF in a single frame. However, the number of sub-frames for use in uniformity is arbitrary. The distributed light intensity distribution 820 may be made uniform in the sub-scanning direction V in two sub-frames SF or four or more sub-frames SF.

Further, in the above embodiment, the frame F is divided into sub-frames SF, and a scanning position is shifted in the sub-scanning direction V between the sub-frames SF. However, an operation position may be shifted in the sub-scanning direction V between continuous frames F.

Further, in the above embodiment, pieces of drawing data in a plurality of kinds of scanning (first scanning, second scanning, and third scanning) in which a scanning position is shifted in the sub-scanning direction V are the same drawing data. However, the drawing data is not limited thereto, and different kinds of drawing data may be used.

Further, in the above embodiment, main scanning is performed while sub-scanning is being performed. However, a sub-scanning drive signal may be adjusted so that a scanning line on the transmissive screen 40 is substantially parallel to the main scanning direction H. For example, a sub-scanning drive signal may be a signal that is gradually changed with respect to time.

Further, a single scanning line in the main scanning direction H does not necessarily need to scan a single lens row of the MLA 41 and may scan two lens rows adjacent to each other in the main scanning direction H. Furthermore, lens rows adjacent to each other in the main scanning direction H between the sub-frames SF may be scanned.

Further, in the above embodiment, a member for diffusing a display image M is a transmissive screen (transmissive screen 40). However, a reflective screen may be applied.

Further, in the above embodiment, the transmissive screen 40 made up of a combination of a single MLA 41 and a single aperture array 42 has been described. However, the transmissive screen 40 may be made up of a dual micro lens array including two micro lens arrays. With this configuration, the distributed light intensity distribution 810 in the main scanning direction H and the distributed light intensity distribution 820 in the sub-scanning direction V in the eye box 4 can be made more uniform. Note that, as a configuration of the dual micro lens array, a dual micro lens array in which both convex surfaces of two micro lens arrays are directed outside, a dual micro lens array in which convex surfaces of two micro lens arrays face each other, and the like can be considered, and it is possible to apply various publicly-known dual micro lens arrays.

### Brief Description of Drawings

[Fig. 1] Fig. 1 is a conceptual diagram showing a mode in which a HUD device according to an embodiment of the invention is mounted on a vehicle.
[Fig. 2] Fig. 2 is a schematic configuration diagram of the HUD device according to the above embodiment.
[Fig. 3] Fig. 3 is a schematic configuration diagram showing a synthesized laser light generation device in the above embodiment.
[Fig. 4] Fig. 4 shows a scanning mode on a transmissive screen in the above embodiment.
[Fig. 5] Fig. 5(a) is an enlarged plan view of an MLA. Fig. 5(b) is an enlarged plan view of an aperture array.
[Fig. 6] Fig. 6 is a schematic cross-sectional view of the transmissive screen in Fig. 4 in a side view.
[Fig. 7] Fig. 7 is a block diagram for explaining a control system of the HUD device according to the above embodiment.
[Fig. 8] Fig. 8 is a conceptual diagram showing a relationship between a beam diameter on the transmissive screen and a pitch of the MLA in the above embodiment.
[Fig. 9] Fig. 9 shows a distributed light intensity distribution in a main scanning direction in an eye box by using the HUD device of the above embodiment.
[Fig. 10] Fig. 10 shows scanning in the main scanning direction in the above embodiment and distributed light intensity distributions in the main scanning direction in the eye box, the distributed light intensity distributions being generated by this scanning in the main scanning direction.
[Fig. 11] Fig. 11 shows an hourly averaged distributed light intensity distribution in the main scanning direction in the eye box in the above embodiment.
[Fig. 12] Fig. 12 shows scanning in a sub-scanning direction in the above embodiment and distributed light intensity distributions in the sub-scanning direction in the eye box, the distributed light intensity distributions being generated by this scanning in the sub-scanning direction.
[Fig. 13] Fig. 13 shows time transition of a sub-scanning position in the HUD device of the above embodiment.
[Fig. 14] Fig. 14 is a diagram for explaining a mode of a scanning line scanned in each sub-frame in the above embodiment.
[Fig. 15] Fig. 15 shows an hourly averaged distributed light intensity distribution in the sub-scanning direction in the eye box in the above embodiment.

### Industrial Applicability

The invention relates to a head-up display device for superimposing a virtual image on a real view to cause the virtual image to be visually recognized. The head-up display device is placed in, for example, a dashboard of a vehicle and is suitable as a display device for emitting image light toward a windshield of a vehicle.

### Reference Signs List

1 HUD device (head-up display device)
2 vehicle
3 windshield
4 eye box
10 synthesized laser light generation device
11 LD (11r, 11g, 11b)
12 condensing optical system (12r, 12g, 12b)
13 optical axis adjustment unit (13r, 13g)
20 MEMS scanner
30 field lens
40 transmissive screen (lens array screen)
41 MLA (micro lens array)
41a micro lens
42 aperture array
42a opening portion
42b light shielding portion
50 relay optical unit
51 plane mirror
52 magnifying mirror
100 LD control unit (control unit)
200 MEMS control unit (control unit)
300 controller unit (control unit)
310 input processing unit
320 memory control unit
330 frame buffer
340 display control unit
500 synthesized laser light
600 image light
710 light intensity distribution in main scanning direction
720 light intensity distribution in sub-scanning direction
810 distributed light intensity distribution in main scanning direction
820 distributed light intensity distribution in sub-scanning direction
R red laser light
G green laser light
B blue laser light
M display image
W virtual image

## Claims

1. A head-up display device, comprising:
a light source configured to emit laser light;
a scanning unit configured to two-dimensionally scan the laser light in a main scanning direction and a sub-scanning direction different from the main scanning direction;
a lens array screen having a plurality of micro lenses that are periodically arranged, the lens array screen being configured to diffuse the laser light scanned by the scanning unit and direct the laser light to a visual recognition region; and
a control unit configured to control the light source and the scanning unit to generate a display image on the lens array screen, wherein
the control unit causes first scanning to be performed and causes second scanning to be performed, the first scanning being scanning in which scanning is performed in the sub-scanning direction while scanning is being performed in the main scanning direction at a high speed, the second scanning being scanning in which a position shifted in the sub-scanning direction from the first scanning on the lens array screen is scanned.

2. The head-up display device according to claim 1, wherein
the same display image is generated in the first scanning and the second scanning.

3. The head-up display device according to claim 1 or 2, wherein
a pitch of the micro lenses in the sub-scanning direction is larger than a diameter of the laser light in the sub-scanning direction.

4. The head-up display device according to any one of claims 1 to 3, wherein
the control unit performs the first scanning and the second scanning within temporal resolution of a human eye.

5. The head-up display device according to any one of claims 1 to 4, wherein:
the micro lenses are rectangular lenses two-dimensionally arranged in the main scanning direction and the sub-scanning direction; and
the control unit moves a scanning position in the sub-scanning direction by the same distance as a pitch of the micro lenses while the scanning unit is scanning a single line in the main scanning direction.

6. The head-up display device according to any one of claims 1 to 5, wherein
a shift between the first scanning and the second scanning in the sub-scanning direction is smaller than a pitch of the micro lenses in the sub-scanning direction.
